# EUROPÄISCHE PATENTSCHRIFT

(11) **EP 1 526 304 B1**
(45) Veröffentlichungstag und Bekanntmachung des Hinweises auf die Patenterteilung: **03.03.2010**
(21) Anmeldenummer: 04018796.5
(22) Anmeldetag: 07.08.2004
(51) Int. Cl.: F16H 3/00

(54) **Mehrstufiges Schaltgetriebe für eine Brennkraftmaschine**
Multigear manual gearbox for an internal combustion engine
Boîte de vitesses manuelle à plusieurs vitesses pour un moteur à combustion interne

(30) Priorität: 25.10.2003 DE 10349841
(43) Veröffentlichungstag der Anmeldung: 27.04.2005
(73) Patentinhaber: Dr. Ing. h.c. F. Porsche Aktiengesellschaft, 70435 Stuttgart (DE)
(72) Erfinder: Höbel, Peter, 75242 Neuhausen (DE)

(56) Entgegenhaltungen:
- EP-A- 1 085 237
- EP-A1- 1 469 229
- EP-A2- 0 344 713
- DE-A1- 3 546 454
- DE-A1- 10 038 090
- PATENT ABSTRACTS OF JAPAN Bd. 008, Nr. 047 (M-280), 2. März 1984 (1984-03-02) & JP 58 200837 A (TOYOTA JIDOSHA KOGYO KK), 22. November 1983 (1983-11-22)

## Beschreibung

Die Erfindung geht aus von einem mehrstufigen Schaltgetriebe für eine Brennkraftmaschine gemäß den Merkmalen des Oberbegriffs des Anspruchs 1.

Sogenannte Doppelkupplungsgetriebe (siehe z. B. DE 100 38 090 A1) sind im Fahrzeugbau seit vielen Jahren bekannt und finden zunehmend auch im Sportwagenbereich Anwendung, um den geringeren Kraftstoffverbrauch und die Sportlichkeit eines Handschaltgetriebes mit dem Komfort eines Automatikgetriebes zu verbinden. Während über den einen Strang angetrieben wird, kann auf dem anderen Strang die nächste Übersetzungsstufe vorgewählt werden. Das vordergründig attraktive ist die Verwendung bekannter und bewährter Schaltelemente (z. B. SynchronisierEinrichtungen und Kupplungen).

Funktionsbedingt ist die Radsatzanordnung für eine Doppelkupplungsgetriebe so gewählt, dass die geraden und ungeraden Gänge jeweils auf einer eigens dafür vorgesehenen Getriebeeingangswelle angeordnet sind. So ist z. B. aus der DE 35 46 454 A1 ein Gangschaltgetriebe für ein Kraftfahrzeug mit Doppelkupplung bekannt, bei dem auf der Getriebeausgangswelle die Schaltzahnräder sowie den Schaltzahnrädern zugeordnete Synchronisiereinheiten angeordnet sind, während auf den beiden fluchtend nebeneinander angeordneten Getriebeeingangswellen die Festzahnräder angeordnet sind.

Weiterhin ist aus der gattungsgemäßen EP 0 344 713 A2 ein Doppelkupplungsgetriebe bekannt, welches zwei Getriebeeingangswellen, eine Getriebeausgangswelle und weitere Synchronisiereinheiten umfasst. Auf der ersten Getriebeeingangswelle sind Zahnräder für die geraden Gänge und auf der zweiten Getriebeeingangswelle ebenfalls Zahnräder für die ungeraden Gänge angeordnet. Dabei sind auf der Getriebeausgangswelle Los-Zahnräder zur Ausbildung von Zahnradpaarungen mit den auf den beiden Getriebeeingangswellen angeordneten Zahnrädern und Synchronisiereinrichtungen für die Los-Zahnräder vorgesehen.

Aufgabe der Erfindung ist es, die Anordnung der Radsätze sowie deren Lagerung in einem Doppelkupplungsgetriebe so zu verbessern, dass einerseits ein kompakter Aufbau, insbesondere in Bezug auf die Getriebelänge, und andererseits ein hoch belastbares Getriebe umsetzbar ist, das im Betrieb trotz entsprechender Wärmeausdehnungen und Momenteneinwirkungen weitgehend spannungs- bzw. reibungsfrei arbeitet.

Mit der vorgeschlagenen Anordnung der Radsätze sowie der den beiden Teilgetrieben zugeordneten Synchronisiereinrichtungen wird ein kompakt bauendes Doppelkupplungsgetriebe umgesetzt, das den heutigen Anforderungen leistungs- bzw. drehmomentstarker Motoren Rechnung trägt.

Die höher belasteten Gänge, wie erster Gang, zweiter Gang und Rückwärtsgang, sind unmittelbar neben den Lagenebenen angeordnet, so dass trotz eines entsprechenden Kraftflusses mögliche Durchbiegungen der Getriebewellen und damit Verspannungen der Radsätze reduziert sind.

Durch die in den Unteransprüchen angegebenen Merkmale sind vorteilhafte Weiterbildungen und Ausgestaltungen des mehrstufigen Schaltgetriebes möglich.

Dadurch, dass den Getriebewellen des Doppelkupplungsgetriebes eine gemeinsame Festlagerebene zugeordnet ist, kann die Toleranzkette verringert werden, auftretende Längenänderungen aufgrund von Temperaturänderungen bleiben einheitlich; darüber hinaus sind mit dieser Lagerung entsprechende Montagevorteile erzielbar.

Die die Radsätze tragenden Getriebewellen sind lediglich zwischen zwei Lagerebenen aufgenommen, so dass damit die Baulänge des Getriebes entsprechend verkürzt werden kann.

Dadurch, dass sämtliche Schaltzahnräder auf der Getriebeausgangswelle angeordnet sind, können die Schaltgabeln zur Betätigung der auf der Getriebeausgangswelle angeordneten Schaltmuffen alle auf einer gemeinsamen Schaltachse angeordnet werden. Dabei ist die Schaltachse auf derselben Festlagerebene wie die beiden Getriebeeingangswellen und die Getriebeausgangswelle abgestützt, so dass temperaturbedingte Längenänderungen der Getriebewellen und der Schaltachse einheitlich bleiben.

Ein Ausführungsbeispiel der Erfindung ist in der Zeichnung dargestellt und wird im nachfolgenden näher erläutert.

Es zeigen:
- Fig. 1: eine Kupplungsanordnung für eine Doppelkupplungsgetriebe,

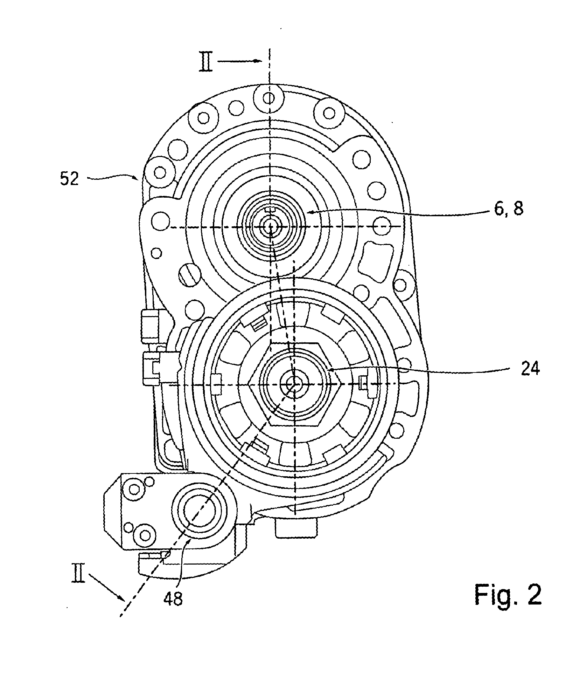

- Fig. 2: eine Stirnansicht auf die Getriebewellen eines Doppelkupplungsgetriebes,
- Fig. 3: einen Schnitt entlang der Linie II - II in Fig. 2 und

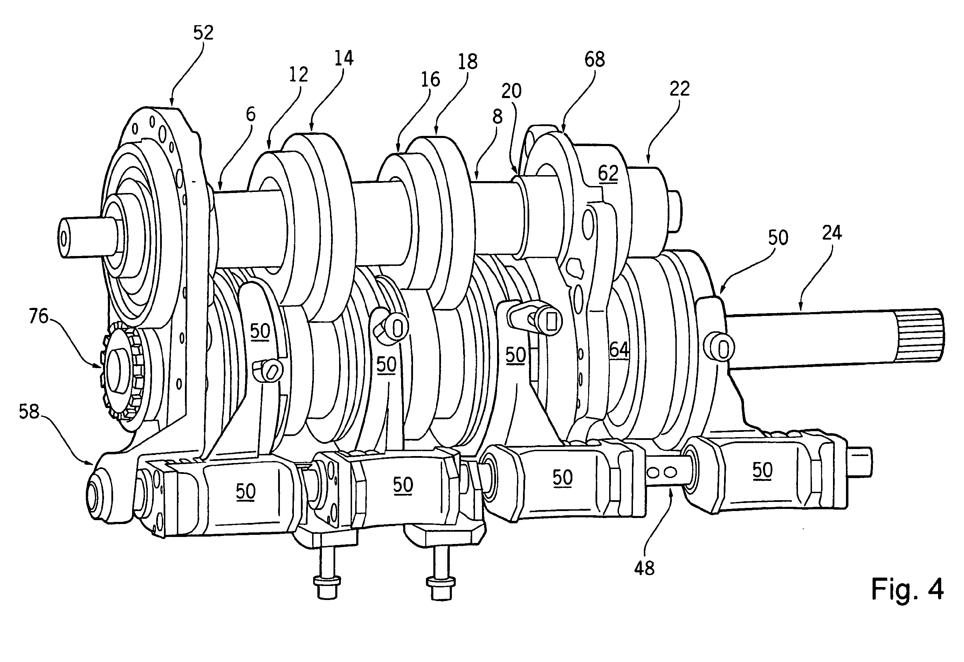

- Fig. 4: eine Perspektivdarstellung auf die Getriebewellen des Doppelkupplungsgetriebes.

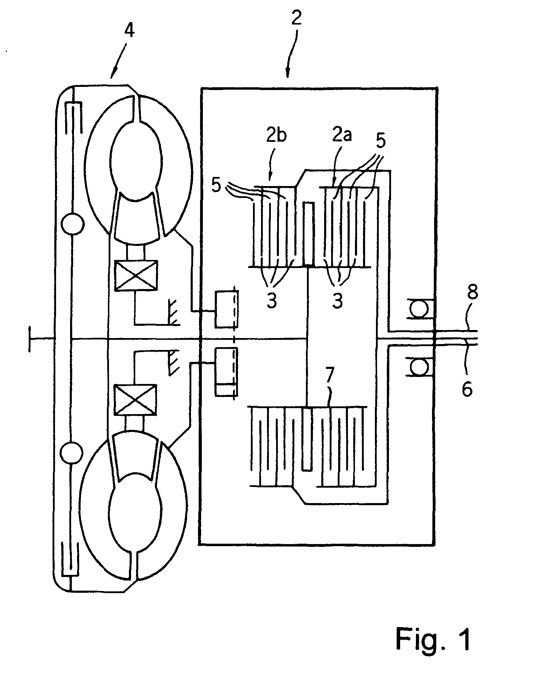

Die in Fig. 1 schematisch dargestellte Lamellenkupplung 2 ist Bestandteil einer Doppelkupplungsanordnung 2, die eingangsseitig über einen Drehmomentwandler 4 mit einem nicht dargestellten Motor und ausgangsseitig mit zwei Getriebeeingangswellen 6 und 8 verbunden ist. Letztere sind drehfest mit einem inneren Kupplungskorb 2a bzw. einem äußeren Kupplungskorb 2b verbunden, die beide, wie auch die Getriebeeingangswellen 6 und 8, konzentrisch zueinander angeordnet sind. In den beiden Kupplungskörben 2a, 2b sind außenverzahnte Lamellenscheiben 3 sowie innenverzahnte Lamellenscheiben 5 angeordnet, wobei die außenverzahnten Lamellenscheiben 3 mit dem Kupplungskorb 2a bzw. 2b drehfest verbunden sind, während die innenverzahnten Lammellenscheiben 5 auf einem Lamellenträger 7 drehfest angeordnet sind.

Die beiden im Getriebegehäuse 9 aufgenommenen Getriebeeingangswellen 6 und 8 weisen an ihrem dem Kupplungskorb 2a bzw. 2b zugeordneten Ende eine Steckverzahnung 6a und 8a auf, über die sie drehfest mit dem jeweiligen Kupplungskorb 2a bzw. 2b verbunden sind. Auf der als Hohlwelle ausgebildeten Getriebeeingangswelle 6 sind die Zahnräder 10, 12 und 14 für das Teilgetriebe mit den geraden Gängen angeordnet, die alle als Festzahnräder drehfest mit der Getriebeeingangswelle 6 verbunden sind. Zahnrad 10 bildet dabei den 2. Gang, Zahnrad 12 den 4. Gang und Zahnrad 14 den 6. Gang des Doppelkupplungsgetriebes. Auf der als Vollwelle ausgebildeten und die Hohlwelle 6 tragenden zweiten Getriebeeingangswelle 8 sind die (Fest-) Zahnräder für das Teilgetriebe mit den ungeraden Gängen angeordnet. Dabei bildet Zahnrad 16 den 3. Gang, Zahnrad 18 den 5. Gang und Zahnrad 20 den 1. Gang. Am Ende der Radsatzanordnung ist, durch eine Lagerebene vom Zahnrad 20 für den 1.

Gang getrennt, auf der Getriebeeingangswelle 8 noch das Zahnrad 22 für die Ausbildung des Rückwärtsganges angeordnet. Zur Ausbildung der einzelnen Gangstufen sind auf der parallel und im Abstand zu den beiden Getriebeeingangswellen 6, 8 angeordneten Getriebeausgangswelle 24 mit den Zahnrädern 10 bis 22 der Getriebeeingangswellen 6 und 8 kämmend in Eingriff stehende (Los-) Zahnräder 26 bis 38 angeordnet.

Zur Herstellung einer drehfesten Verbindung zwischen Getriebeausgangswelle 24 und den darauf angeordneten (Los-) Zahnrädern 26 bis 38 sind zwischen den Zahnrädern 26 und 28, 30 und 32 sowie 34 und 36 jeweils eine Synchronisiereinheit 40, 42 und 44 angeordnet; analog dazu ist dem (Los-) Zahnrad 38 für den Rückwärtsgang eine Synchronisiereinheit 46 zugeordnet. Die baugleich ausgebildeten Synchronisiereinheiten sind nach der Borg-Warner-Bauart ausgebildet, wobei, wie allgemein bekannt ist, die den Synchronisiereinheiten zugeordneten Synchronringe, solange eine Drehzahldifferenz zwischen Schaltmuffe und dem der Schaltmuffe zugeordneten Zahnrad vorhanden ist, aufgrund des Reibmoments soweit verdreht werden, dass ihre Sperrzähne vor den Schaltklauen der Schaltmuffen liegen und damit das Verschieben der Schaltmuffe verhindern.

Parallel zur Getriebeausgangswelle 24 verlaufend ist eine Schaltachse 48 angeordnet, auf der vier Schaltgabeln 50 längsverschieblich gelagert sind. Die Schaltgabeln 50 greifen dabei mit ihrem gabelförmigen Abschnitt in die den Zahnrädern 26 bis 38 zugeordneten Schaltmuffen der Schaltgabeln 50 ein. Mit Hilfe einer z. B. hydraulischen Ansteuerung der Schaltgabeln 50 wird durch ihre axiale Verschiebung über die Schaltmuffen der Synchronisiereinheiten 40 bis 46 eine drehfeste Verbindung zwischen Getriebeausgangswelle 24 und dem entsprechenden Zahnrad 26 bis 38 hergestellt.

Durch die gewählte Radsatzanordnung ist es möglich, dass - ausgenommen von der Synchronisierung des Rückwärtsganges - jeweils eine Synchronisiereinheit zwei zu schaltenden Gängen zugeordnet ist, wobei die Synchronisiereinheit 42 für die Synchronisierung eines geraden Ganges (6. Gang) und eines ungeraden Ganges (3. Gang) verantwortlich ist.

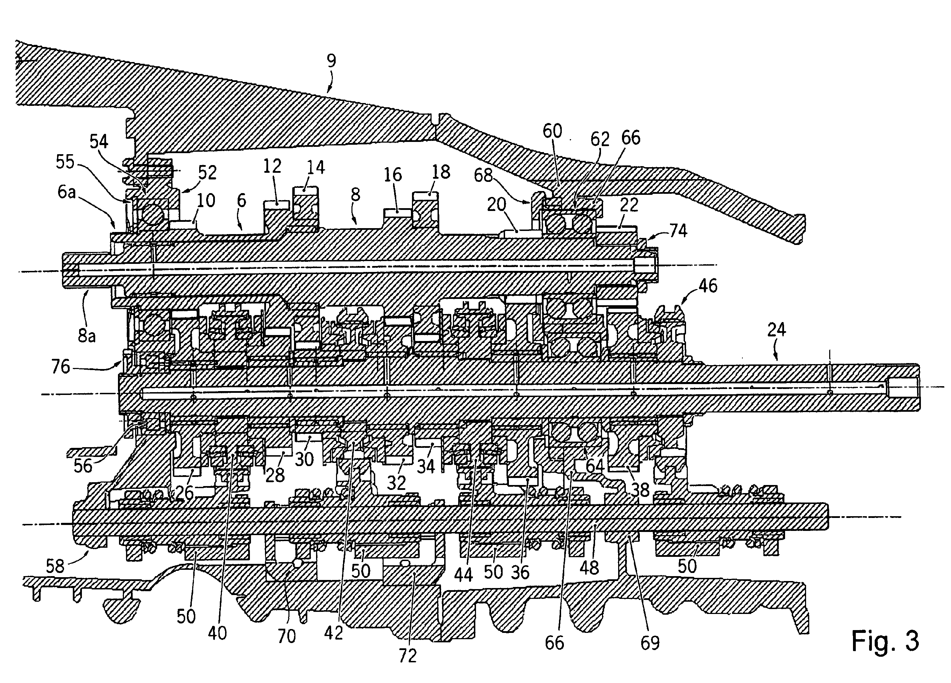

Zur Lagerung der beiden Getriebeeingangwellen 6 und 8, der Getriebeausgangswelle 24 und der Schaltachse 48 ist auf der der Lamellenkupplung 2 zugeordneten Seite eine Lagerplatte 52 vorgesehen, die als ein erstes gemeinsames Festlager für die Aufnahme bzw. Lagerung der beiden Getriebeeingangswellen 6 und 8, der Getriebeausgangswelle 24 und der Schaltachse 48 vorgesehen ist. Die brillenförmig ausgebildete Lagerplatte 52 ist dabei im Getriebegehäuse 9 verschraubt und weist zwei entsprechende Öffnungen zur Aufnahme der beiden Getriebeeingangswellen 6 und 8 sowie der Getriebeausgangswelle 24 auf. Wie aus Fig. 3 ersichtlich, ist für die Lagerung der beiden Getriebeeingangswellen 6 und 8 ein als Kugellager ausgebildetes erstes Wälzlager 54 vorgesehen, während die Getriebeausgangswelle 24 mit Hilfe eines als Zylinder- Rollenlager ausgebildeten zweiten Wälzlagers 56 in der Lagerplatte 52 aufgenommen ist. Zur axialen Fixierung des Wälzlagers 54 ist ein Sicherungsring 55 vorgesehen, der in einer in der Öffnung der Lagerplatte 52 ausgebildeten Ringnut aufgenommen ist.

Unterhalb der zweiten Lagerebene für die Getriebeausgangswelle 24 ist aus der Lagerplatte 52 ein abgewinkelter Fortsatz 58 herausgebildet, dessen darin vorgesehene Öffnung als eine erste Lagerstelle für die Schaltachse 48 ausgebildet ist. Als zweite Lagerebene 60 für die Getriebeeingangswelle 8 und die Getriebeausgangswelle 24 ist jeweils ein Doppel- Kugellager 62 und 64 vorgesehen. Beide Wälzlager 62 und 64 sind in einer aus dem Getriebegehäuse 9 herausgebildeten Lagerstützwand 66 aufgenommen und werden zur axialen Absicherung von einer zweiten Lagerplatte 68 begrenzt, die an der Lagerstützwand 66 verschraubt ist.

Unterhalb der Getriebeausgangswelle 24 ist in der Lagerstützwand 66 eine Lagerbuchse 69 zur Aufnahme der Schaltachse 48 vorgesehen, die zwischen dieser und der vorderen Lagerstelle (Fortsatz 58) noch über weitere Lagerstellen (Radiallager 70 und 72) abgestützt ist. Die Getriebeeingangswelle 6 ist an dem dem Rückwärtsgang 22 zugeordneten Ende über eine Mutter 74 axial gesichert; analog dazu ist zur axialen Sicherung für die Getriebeausgangswelle 24 an ihrem der Lagerplatte 52 zugeordneten Ende ebenfalls eine Mutter 76 vorgesehen, die auf der Getriebeausgangswelle 24 verschraubt ist.

## Patentansprüche

1. Mehrstufiges Schaltgetriebe für eine Brennkraftmaschine, mit einer Doppelkupplungsanordnung, bei der eine erste Kupplung mit einer ersten Getriebeeingangswelle (6) und eine zweite Kupplung mit einer zumindest teilweise koaxial zu ersten Getriebeeingangswelle (6) verlaufenden zweiten Getriebeeingangswelle (8) verbindbar ist, wobei auf der ersten Getriebeeingangswelle (6) Zahnräder (10, 12, 14) für die geraden Gänge und auf der zweiten Getriebeeingangswelle (8) Zahnräder (16 bis 22) für die ungeraden Gänge angeordnet sind, sowie mit einer parallel zu den Getriebeeingangswellen (6, 8) verlaufenden Getriebeausgangswelle (24), auf der Los-Zahnräder (26 bis 38) zur Ausbildung von Zahnradpaarungen mit den auf den beiden Getriebeeingangswellen (6, 8) angeordneten Zahnrädern und Synchronisiereinrichtungen (40 bis 46) für die Los-Zahnräder vorgesehen sind, wobei sämtliche Los-Zahnräder (26 bis 38) und die den Los-Zahnrädern zugeordneten Synchronisiereinheiten (40 bis 46) auf der Getriebeausgangswelle (24) angeordnet sind, und jeweils zwei Vorwärtsgängen eine Synchronisiereinheit zugeordnet ist, wobei eine Synchronisiereinheit (42) zur wahlweisen drehfesten Verbindung eines Zahnrades (30) für einen geraden Gang sowie eines Zahnrades (32) für einen ungeraden Gang vorgesehen ist, und wobei zur Aufnahme der Getriebeeingangswellen (6, 8) und der Getriebeausgangswelle (24) Lagerebenen (52, 60) vorgesehen sind,
**dadurch gekennzeichnet, dass**
die höher belasteten Gängen, wie erster Gang, zweiter Gang und Rückwärtsgang, unmittelbar neben den Lagerebenen (52, 60) angeordnet sind.

2. Mehrstufiges Schaltgetriebe nach Anspruch 1, **dadurch gekennzeichnet, dass** für die beiden Getriebeeingangswellen (6, 8) und die Getriebeausgangswelle (24) eine gemeinsame Lagerebene (52) vorgesehen ist.

3. Mehrstufiges Schaltgetriebe nach Anspruch 2, **dadurch gekennzeichnet, dass** zur Lagerung des auf den Getriebeeingangswellen (6, 8) und der Getriebeausgangswelle (24) angeordneten Radsatzes lediglich zwei Lagerebenen (52, 60) vorgesehen sind.

4. Mehrstufiges Schaltgetriebe nach Anspruch 2, **dadurch gekennzeichnet, dass** die zum Betätigen der Schaltmuffen der Synchronisiereinheiten (40 bis 46) vorgesehenen Schaltgabeln (50) auf einer Schaltachse (48) angeordnet sind, wobei die Schaltachse (48) auf denselben Lagerebenen (52, 60), wie die beiden Getriebeeingangswellen (6, 8) und die Getriebeausgangswelle (24) abgestützt ist.

5. Mehrstufiges Schaltgetriebe nach einem der Ansprüche 2 bis 4, **dadurch gekennzeichnet, dass** mindestens eine Lagerebene als separate Lagerplatte (52) ausgebildet ist, die am Getriebegehäuse (9) verschraubt ist.

## Claims

1. Multi-stage manual gearbox for an internal combustion engine, having a double clutch arrangement in which a first clutch can be connected to a first gearbox input shaft (6) and a second clutch can be connected to a second gearbox input shaft (8) which runs at least partially coaxially with respect to the first gearbox input shaft (6), with gearwheels (10, 12, 14) for the even-numbered gears being arranged on the first gearbox input shaft (6) and gearwheels (16 to 22) for the odd-numbered gears being arranged on the second gearbox input shaft (8), and having a gearbox output shaft (24) which runs parallel to the gearbox input shafts (6, 8) and on which are provided loose gearwheels (26 to 38), for forming gearwheel pairs with the gearwheels arranged on the two gearbox input shafts (6, 8), and synchronizing devices (40 to 46) for the loose gearwheels, with all the loose gearwheels (26 to 38) and the synchronizing units (40 to 46) assigned to the loose gearwheels being arranged on the gearbox output shaft (24), and with in each case two forward gears being assigned to a synchronizing unit, with one synchronizing unit (42) being provided for selectively rotationally fixedly connecting a gearwheel (30) for an even-numbered gear and a gearwheel (32) for an odd-numbered gear, and with bearing planes (52, 60) being provided for holding the gearbox input shafts (6, 8) and the gearbox output shaft (24),
**characterized in that**
the more highly loaded gears, such as the first gear, second gear and reverse gear, are arranged directly adjacent to the bearing planes (52, 60).

2. Multi-stage manual gearbox according to Claim 1, **characterized in that** a common bearing plane (52) is provided for the two gearbox input shafts (6, 8) and the gearbox output shaft (24).

3. Multi-stage manual gearbox according to Claim 2, **characterized in that** only two bearing planes (52, 60) are provided for mounting the wheel set arranged on the gearbox input shafts (6, 8) and on the gearbox output shaft (24).

4. Multi-stage manual gearbox according to Claim 2, **characterized in that** the shift forks (50) provided for actuating the shift sleeves of the synchronizing units (40 to 46) are arranged on a shift axle (48), with the shift axle (48) being supported on the same bearing planes (52, 60) as the two gearbox input shafts (6, 8) and the gearbox output shaft (24).

5. Multi-stage manual gearbox according to one of Claims 2 to 4, **characterized in that** at least one bearing plane is designed as a separate bearing plate (52) which is screwed to the gearbox housing (9).

## Revendications

1. Boîte de vitesses à plusieurs étages pour un moteur à combustion interne, comprenant un agencement de double embrayage, dans lequel un premier embrayage peut être connecté à un premier arbre d'entrée de boîte de vitesses (6) et un deuxième embrayage peut être connecté à un deuxième arbre d'entrée de boîte de vitesses (8) s'étendant au moins en partie coaxialement au premier arbre d'entrée de boîte de vitesses (6), sur le premier arbre d'entrée de boîte de vitesses (6) étant disposées des roues dentées (10, 12, 14) pour les vitesses paires et sur le deuxième arbre d'entrée de boîte de vitesses (8) étant disposées des roues dentées (16 à 22) pour les vitesses impaires, et comprenant un arbre de sortie de boîte de vitesses (24) s'étendant parallèlement aux arbres d'entrée de boîte de vitesses (6, 8), sur lequel sont disposés des pignons fous (26 à 28) pour réaliser des paires de roues dentées avec les roues dentées disposées sur les deux arbres d'entrée de boîte de vitesses (6, 8), ainsi que des dispositifs de synchronisation (40 à 46) pour les pignons fous, tous les pignons fous (26 à 38) et les unités de synchronisation (40 à 46) associées aux pignons fous étant disposés sur l'arbre de sortie de boîte de vitesses (24), et deux vitesses avant étant à chaque fois associées à une unité de synchronisation, une unité de synchronisation (42) étant prévue pour la connexion sélective solidaire en rotation d'une roue dentée (30) pour une vitesse paire ainsi que d'une roue dentée (32) pour une vitesse impaire, et des plans de palier (52, 60) étant prévus pour recevoir les arbres d'entrée de boîte de vitesses (6, 8) et l'arbre de sortie de boîte de vitesses (24),
**caractérisée en ce que**
les vitesses plus fortement sollicitées, comme la première vitesse, la deuxième vitesse et la marche arrière, sont disposées directement à côté des plans de palier (52, 60).

2. Boîte de vitesses à plusieurs étages selon la revendication 1, **caractérisée en ce que** pour les deux arbres d'entrée de boîte de vitesses (6, 8) et l'arbre de sortie de boîte de vitesses (24), on prévoit un plan de palier commun (52).

3. Boîte de vitesses à plusieurs étages selon la revendication 2, **caractérisée en ce que** pour le support sur palier du jeu de roues disposé sur les arbres d'entrée de boîte de vitesses (6, 8) et l'arbre de sortie de boîte de vitesses (24), on prévoit seulement deux plans de palier (52, 60).

4. Boîte de vitesses à plusieurs étages selon la revendication 2, **caractérisée en ce que** les fourchettes de sélection (50) prévues pour la commande des manchons de sélection des unités de synchronisation (40 à 46) sont disposées sur un axe de changement de vitesses (48), l'axe de changement de vitesses (48) étant supporté sur les mêmes plans de palier (52, 60) que les deux arbres d'entrée de boîte de vitesses (6, 8) et l'arbre de sortie de boîte de vitesses (24).

5. Boîte de vitesses à plusieurs étages selon l'une quelconque des revendications 2 à 4, **caractérisée en ce qu'**au moins un plan de palier est réalisé sous forme de plaque de palier séparée (52), qui est vissée sur le carter (9) de la boîte de vitesses.
